## Europäisches Patentamt

## European Patent Office

## Office européen des brevets

(19)

(11) Veröffentlichungsnummer: **0 187 928**

**B1**

(12) # EUROPÄISCHE PATENTSCHRIFT

(45) Veröffentlichungstag der Patentschrift:
**29.03.89**

(51) Int. Cl.⁴: **G 21 C 3/06**

(21) Anmeldenummer: **85115013.6**

(22) Anmeldetag: **27.11.85**

(54) **Oberflächenbeschichtete Bauteile von Kernenergieanlagen.**

(30) Priorität: **11.12.84 DE 3445166**

(43) Veröffentlichungstag der Anmeldung:
**23.07.86 Patentblatt 86/30**

(45) Bekanntmachung des Hinweises auf die Patenterteilung:
**29.03.89 Patentblatt 89/13**

(84) Benannte Vertragsstaaten:
**AT BE CH DE FR GB IT LI LU NL SE**

(56) Entgegenhaltungen:
**COMPENDEX, 7412-79349, NACE, Int. Corros. Forum, Chicago, März 1974, Westinghouse, Houston, US; G.A. WHITLOW et al.: "Sodium compatibility studies of low friction carbide coatings for reactor application"**
**CORROSION-NACE, Band 30, Nr. 12, Dezember 1974, Seiten 420-426, Westinghouse, Houston, US; G.A. WHITLOW et al.: "Sodium compatibility studies of low friction carbide coatings for reactor application"**
**CHEMICAL ABSTRACTS, Band 96, 7. Juni 1982, Seite 505, Nr. 207128a, Columbus, Ohio, US; V. HEINZEL et al.: "Delay of the attack of molten steel on niobium by titanium nitride/titanium carbide (TiN/TiC) multilayer protective coatings", & KERNFORSCHUNGSZENT. KARLSRUHE. (Ber) KFK 1982, KfK 3257, 166 pp.**

(73) Patentinhaber: **INTERATOM Gesellschaft mit beschränkter Haftung, Friedrich- Ebert- Strasse, D-5060 Bergisch- Gladbach 1 (DE)**

(72) Erfinder: **Menken, Günther, Dipl.- Ing., Höhenstrasse 21, D-5063 Overath (DE)**

(74) Vertreter: **Mehl, Ernst, Dipl.- Ing., Postfach 22 13 17, D-8000 München 22 (DE)**

## Beschreibung

Die vorliegende Erfindung betrifft metallische Bauteile von Kernenergieanlagen nach dem Oberbegriff des einzigen Anspruchs. Die für den Bau von Kernenergieanlagen verwendeten metallischen Werkstoffe, in erster Linie austenitische Stähle sind zwar dank besonderer, in dieser Richtung gehender Entwicklungsarbeiten korrosionsbeständiger und (z. B. durch den Verzicht auf einen Gehalt an Kobalt) weniger stark bzw. für nur geringere Zeiträume aktivierbar im Vergleich zu in der konventionellen Technik verwendeten Werkstoffen. Dennoch hat sich gezeigt, daß an den Oberflächen, die mit Kühlmittel in Berührung kommen, Bestandteile der metallischen Werkstoffe, wenn auch nur in sehr geringem Ausmaß, im Kühlmittel in Lösung gehen. Neben den hierdurch hervorgerufenen meist nachteiligen Änderungen der ursprünglichen metallurgischen Eigenschaften führt dies im Bereich des Primärkühlkreislaufes zu einer ausgedehnten Ablagerung von radioaktiven Materialien im gesamten Kreislauf, was seine Zugänglichkeit für Wartung und Reparatur einschränkt. Dabei kann es sich um bereits an ihrem ursprünglichen Ort aufaktivierte Materialien handeln oder auch um solche, die erst im gelösten Zustand beim Durchgang durch die Spaltzone des Kernreaktors aufaktiviert werden.

In Corrosion NACE, Band 30, Nr. 12, Dezember 1974, Seiten 420 - 426, Westinghouse, Houston U.S.A. wird das Verhalten von Titan-Carbid-Schichten untersucht, wobei diese Schichten eine Dicke von 102 bis 152 µm aufweisen. Bei der Herstellung dieser Schichten wurde ein Molybdän oder Nichrom Binder verwendet.

Der Fachmann ist bislang bestrebt gewesen, diese nachteiligen Wirkungen durch die Auswahl besonders korrosionsbeständiger Werkstoffe oder durch Beschichtung der dem Kühlmittel ausgesetzten Oberflächen zu begegnen. Für mit flüssigem Natrium als Kühlmittel betriebene Kernenergieanlagen ist zum Beispiel vorgeschlagen worden, die davon benetzten Bauteile aus einer Vanadin-Legierung herzustellen; dies führt jedoch nur dann zum gewünschten Ergebnis, wenn ein hoher Reinheitsgrad des Natriums gewährleistet werden kann, was zu erheblichen Aufwendungen für seine regelmäßige Reinigung zwingt. Als Beschichtungsmaterial z. B. für die Hüllrohre von Kernbrennstäben ist Molybdän verwendet worden; durch Diffusionseffekte zwischen der Beschichtung und dem Grundmaterial (besonders bei hohen Temperaturen) kommt es jedoch mit der Zeit zur Bildung von Poren an der Grenzfläche Grundmaterial zu Beschichtung, wodurch die Beschichtung geschädigt wird.

Um die aufgrund dieser Effekte bei Wartungs- und Reparaturarbeiten meist erforderlichen Dekontaminationsarbeiten zu erleichtern, ist man bemüht, die hiervon betroffenen Oberflächen von vornherein sehr glatt auszubilden, was zu einem erhöhten Fertigungsaufwand für die Oberflächenbehandlung zwingt.

Aufgabe der vorliegenden Erfindung ist die Angabe einer Beschichtung für von Kühlmittel, insbesondere von Primärkühlmittel benetzte Bauteile von Kernenergieanlagen, die die oben genannten nachteiligen Effekte minimiert. Hierzu erforderliche Eigenschaften sind neben einer guten Haftfähigkeit auf dem Grundmaterial eine große thermodynamische Stabilität und eine stark diffusionshemmende Wirkung.

Die Lösung dieser Aufgabe erfolgt durch die im kennzeichnenden Teil des einzigen Anspruchs angegebenen Mittel. Die genannten Stoffe sind gegenüber Wasser und Natrium (d. h. den gebräuchlichsten als Kühlmittel in Kernenergieanlagen verwendeten Flüssigkeiten) beständig. Diese an sich bekannten Beschichtungsverfahren sind bislang in erster Linie dazu verwendet worden, Werkzeuge mit einer harten, ihren Verschleiß stark vermindernden Schutzschicht zu versehen. Zur Erzielung dieser Wirkung ist eine etwas größere Schichtdicke naturgemäß von Vorteil.

Demgegenüber genügt für den hier vorgesehenen Verwendungszweck der Bildung einer die Diffusion vom beschichteten Grundwerkstoff in das Kühlmittel bzw. umgekehrt hindernden Schicht gemäß der im Anspruch angegebenen Ausgestaltung der Erfindung eine merklich geringere Schichtdicke.

Angesichts des oben angegebenen Zweckes der Beschichtung, zu einer Verminderung der Bildung radioaktiver Produkte beizutragen, wird der Fachmann selbstverständlich bestrebt sein, die hier vorgeschlagene Beschichtung in möglichst großer Reinheit aufzubringen. Hierzu stehen ihm eine Reihe von bekannten Verfahren zur Verfügung, als da sind Aufspritzen, Aufdampfen, Aufsputtern und chemisch Abscheiden; diese Verfahren erlauben die Herstellung von porenfreien Beschichtungen.

Eine Dekontamination der betreffenden Oberflächen von den dann noch verbleibenden, aus anderen Quellen herrührenden, radioaktiven Stoffen ist ohne Schwierigkeiten durchführbar. Die Oberflächen sind glatt und es sind lediglich anhaftende, nicht jedoch eindiffundierte Radionuklide zu entfernen.

## Patentanspruch

1. In einer Kernenergieanlage eingesetztes metallisches Bauteil mit einer Oberfläche, die dazu bestimmt ist, mit Kühlmittel in Berührung zu kommen, und die mit einer Beschichtung von Titan-Carbid (TiC) und/oder Titan-Nitrid (TiN) und/oder Zirkon-Nitrid (ZrN) versehen ist, dadurch gekennzeichnet, daß die Dicke der Beschichtung 0,1 bis 3 µm beträgt.

## Claim

1. A metallic component used in a nuclear power plant with a surface which is designed to come into contact with cooling agent and which is provided with a coating of titanium carbide (TiC) and/or titanium nitride (TiN) and/or zirconium nitride (ZrN), characterised in that the thickness of the coating is 0.1 to 3 μm.

## Revendication

1. Elément métallique de structure mis en oeuvre dans une installation à énergie nucléaire, ayant une surface destinée à venir en contact avec de l'agent de refroidissement et munie d'un revêtement en carbure de titane (TiC) et/ou en nitrure de titane (TiN) et/ou en nitrure de zirconium (ZrN), caractérisé en ce l'épaisseur du revêtement est comprise entre 0,1 et 3 microns.